(19) Europäisches Patentamt
European Patent Office
Office européen des brevets

(11) **EP 2 368 367 B1**

(12) **FASCICULE DE BREVET EUROPEEN**

(45) Date de publication et mention de la délivrance du brevet:
**22.04.2020 Bulletin 2020/17**

(21) Numéro de dépôt: **09796697.2**

(22) Date de dépôt: **16.12.2009**

(51) Int Cl.:
*H04N 19/107* ^(2014.01)   *H04N 19/114* ^(2014.01)
*H04N 19/132* ^(2014.01)   *H04N 19/142* ^(2014.01)
*H04N 19/14* ^(2014.01)   *H04N 19/172* ^(2014.01)
*H04N 19/177* ^(2014.01)   *H04N 19/179* ^(2014.01)
*H04N 19/192* ^(2014.01)   *H04N 19/31* ^(2014.01)
*H04N 19/33* ^(2014.01)   *H04N 19/587* ^(2014.01)
*H04N 19/87* ^(2014.01)

(86) Numéro de dépôt international:
**PCT/EP2009/067300**

(87) Numéro de publication internationale:
**WO 2010/072636 (01.07.2010 Gazette 2010/26)**

(54) **SYSTÈME ET PROCÉDÉ INTERACTIF POUR LA TRANSMISSION SUR UN RÉSEAU BAS DÉBIT D'IMAGES CLEFS SÉLECTIONNÉES DANS UN FLUX VIDEO**

INTERAKTIVES SYSTEM UND VERFAHREN ZUM ÜBERTRAGEN VON AUS EINEM VIDEOSTROM AUSGEWÄHLTEN SCHLÜSSELBILDERN ÜBER EIN NETZWERK MIT NIEDRIGER BANDBREITE

INTERACTIVE SYSTEM AND METHOD FOR TRANSMITTING KEY IMAGES SELECTED FROM A VIDEO STREAM OVER A LOW BANDWIDTH NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807407**

(43) Date de publication de la demande:
**28.09.2011 Bulletin 2011/39**

(73) Titulaire: **THALES**
**92400 Courbevoie (FR)**

(72) Inventeurs:
• **CAPMAN, François**
**92704 COLOMBES Cedex (FR)**
• **RENAN, Erwann**
**92704 COLOMBES Cedex (FR)**
• **LE BARZ, Cédric**
**91470 Limours En Hurepoix (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-2004/114672       WO-A-2007/047755**
**WO-A-2007/078801       FR-A- 2 891 686**
**US-A1- 2008 232 468**

• **KOPRINSKA I ET AL: "Temporal video segmentation: A survey" SIGNAL PROCESSING. IMAGE COMMUNICATION, ELSEVIER SCIENCE PUBLISHERS, AMSTERDAM, NL, vol. 16, no. 5, 1 janvier 2001 (2001-01-01), pages 477-500, XP004224651 ISSN: 0923-5965**

**Description**

L'invention concerne un système et un procédé interactif de transmission d'images et vidéos sur des réseaux à débit contraint. Elle adresse plus précisément les problématiques de transmission d'images pertinentes haute résolution au sein d'une séquence vidéo sur des réseaux bas débit.

L'invention peut, entre autre, être utilisée dans des applications mettant en œuvre la norme définie en commun par l'ISO MPEG et le groupe video coding de l'ITU-T dite H.264 ou MPEG-4 AVC (advanced video coding) qui est une norme vidéo fournissant une compression plus efficace que les normes vidéo précédentes tout en présentant une complexité de mise en œuvre raisonnable et orientée vers les applications réseau. Elle s'applique également dans le cadre de systèmes de transmission d'images utilisant la norme JPEG 2000 et le protocole de communication JPIP (JPEG2000 Interactive Protocol).

Un des problèmes à résoudre réside dans le fait de pouvoir transmettre des séquences vidéo haute résolution sur des réseaux à débit contraint. En effet, une séquence vidéo haute résolution, même après compression via un dispositif de codage source adapté présente un débit utile qui dépasse souvent la capacité du canal de transmission, notamment celle des réseaux sans fils. Une solution consiste à ne sélectionner et ne transmettre au sein de la séquence que certaines images à une résolution inférieure mais se pose alors les problèmes de la sélection d'images pertinentes dans la séquence afin de transmettre la quasi-totalité de l'information utile contenue dans la vidéo. Un autre problème à résoudre concerne la méthode de transmission à mettre en œuvre pour transmettre et recouvrer, côté récepteur, les images haute résolution. De plus, la mise en œuvre d'une forme d'interactivité entre l'opérateur distant et l'émetteur afin de ne sélectionner qu'une partie du flux vidéo pour la transmission présente des avantages notables afin, par exemple, d'adapter la transmission aux besoins de l'opérateur, et de ne transmettre ainsi que l'information jugée pertinente. Enfin, le souci de complexité de mise en œuvre est un point important à prendre en compte dans la réalisation d'une solution globale et qui satisfait, notamment, les contraintes de temps-réel inhérentes aux applications multimédia interactives.

Dans la suite du texte, l'expression « images pertinentes » ou « images clefs » fera référence à un sous ensemble d'images sélectionnées au sein d'une séquence vidéo et présentant une priorité plus importante du point de vue de l'utilisateur final. Dans le contexte d'une transmission de ladite séquence vidéo sur un réseau bas débit, les images pertinentes sont, par exemple, celles qui présentent une différence de contenu significative entre elles. Dans le contexte d'une compression de ladite séquence vidéo par un codeur vidéo adapté, les images clefs sont également celles qui seront compressées de la façon la plus efficace afin de garantir leur qualité finale en terme de rendu visuel, une fois décompressées. A cet effet, un résumé d'une séquence vidéo correspond à l'ensemble des « images pertinentes » ou « images clefs » de ladite séquence.

Sélection d'images pertinentes dans un flux vidéo

La problématique de la sélection d'images pertinentes au sein d'une séquence vidéo est souvent traitée, dans l'art antérieur, par le biais de solutions qui consistent à créer un résumé de ladite séquence en prenant en compte le contenu global de la vidéo. Par exemple, la demande de brevet US2008/0232687 décrit une méthode permettant de sélectionner des images clefs au sein d'une séquence vidéo. Cette méthode permet également la segmentation temporelle de la séquence afin de produire plusieurs scènes. Ce type de procédé n'est pas adapté à la diffusion en temps réel d'un flux vidéo car il nécessite le traitement de l'intégralité de la séquence pour produire l'ensemble des images clefs associées. A contrario, les contraintes liées à la transmission vidéo nécessitent de traiter les images au fil de l'eau, la méthode de sélection d'images clefs ne bénéficie alors comme point d'entrée que de l'image courante et éventuellement de ses voisines proches temporellement, en particulier des images précédentes si l'on souhaite minimiser le retard de transmission.

Techniques de compression de flux vidéo

Une séquence vidéo comporte de par sa nature même une importante redondance statistique tant dans le domaine temporel que spatial. La volonté d'utiliser toujours plus efficacement la bande passante des média de transmissions sur lesquels transitent ces séquences et les objectifs de réduction du coût de leur stockage ont posé très tôt la question de la compression vidéo. Les techniques classiques de compression vidéo peuvent généralement se diviser en deux étapes. La première vise à réduire la redondance spatiale et pour cela à compresser une image fixe. L'image est tout d'abord divisée en blocs de pixels (de 4x4 ou 8x8 selon les standards MPEG-1/2/4), un passage dans le domaine fréquentiel puis une quantification permet d'approximer ou de supprimer les hautes fréquences auxquelles l'œil est moins sensible, et enfin les données quantifiées sont codées entropiquement. La seconde a pour but de réduire la redondance temporelle. Cette technique permet de prédire une image à partir d'une ou plusieurs autre(s) image(s) de référence(s) précédemment traitée(s) au sein de la même séquence (prédiction de mouvement). Cette technique consiste à chercher dans ces images de références le bloc auquel on souhaite appliquer une prédiction, et seul est conservé un vecteur estimation de mouvement correspondant au déplacement du bloc entre les deux images ainsi qu'une erreur résiduelle permettant de raffiner le rendu visuel.

Granularité temporelle dans un standard vidéo

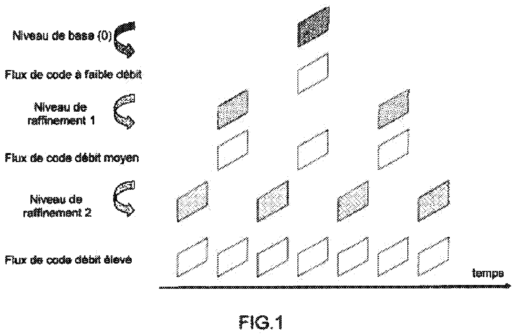

Un flux de données compressées selon une méthode permettant la granularité temporelle, ou en anglo-saxon « a temporally scalable compressed bit-stream », suit un schéma de codage de type hiérarchique. Cette hiérarchie dans le schéma de codage permet la définition d'ensembles d'images qui sont accessibles par échelon ou résolution temporelle. Le premier échelon, appelé "résolution de base", est la séquence minimale permettant une reconstruction sans dégradation des trames qui la compose. Les autres échelons correspondent à des affinements de cette séquence de base. Généralement les échelons de raffinement ont des fréquences de trames multiples de celle de base, le rapport entre ces fréquences de trames est alors appelé facteur d'échelle. Dans un exemple d'une séquence à 30 trames par secondes suivant un schéma de codage avec une granularité temporelle de facteur d'échelle égale à deux et échelonné en trois niveaux, on obtiendrait un premier niveau de résolution (résolution de base) correspondant à un contenu vidéo à 7,5 trames par secondes. Dans cet exemple, si l'on a accès aux sous ensembles de base ainsi qu'a celui du premier niveau de raffinement, un contenu vidéo à 15 trames par seconde est alors accessible. Si l'on rajoute le dernier niveau de raffinement, un contenu vidéo à la résolution temporelle originale (30 trames par secondes) est accessible. Chacun de ces sous ensembles est supposé correspondre à une compression efficace de l'information qu'elle contient. La figure 1 schématise un exemple de granularité temporelle. Le niveau de base (0) correspond à la résolution temporelle minimale qui est transmise. Dans le cadre d'une transmission vidéo, le flux de code correspondant au niveau de base représente l'information minimum que doit recevoir le destinataire et doit donc être compressée de façon à assurer le moins de pertes possibles lors de la transmission. Typiquement, les images contenues dans cette résolution temporelle de base sont encodées de manière indépendante. Les résolutions temporelles de niveaux supérieurs (niveau de raffinement 1 et 2) peuvent être encodées en mettant en œuvre une prédiction par rapport aux images de la résolution de base (0).Une prédiction est possible entre images appartenant à la résolution de base, par contre les images contenues dans la résolution temporelle de base ne peuvent être prédites à partir d'une image contenue dans un autre niveau de raffinement.

Standard JPIP

Le standard JPIP (JPEG 2000 Interactive Protocol) définit un protocole dédié à la transmission progressive d'images conformes au standard JPEG 2000. Il permet de tirer profit des différents niveaux de granularité proposés par JPEG 2000 (granularité spatiale, granularité en résolution, ou en anglo-saxon « resolution », et en qualité). En effet, suite à une requête formulée par l'opérateur, seules les informations nécessaires pour satisfaire cette requête sont transmises, et cela de façon progressive en terme de qualité. L'utilisation du protocole JPIP combiné au standard JPEG 2000 permet de ne pas retransmettre les informations déjà transmises. Ainsi les ressources en termes de débit transmis et de complexité de traitement des deux cotés de la chaine de transmission sont allégées. De plus, l'envoi des informations étant hiérarchisé, il est possible de visualiser rapidement une partie de l'image à une faible qualité, qualité qui s'accroît de façon progressive au fur et à mesure que de nouvelles informations sont reçues. Ce standard peut être utilisé pour effectuer une transmission interactive avec optimisation du débit dans le cas d'une transmission d'images JPEG2000 mais ne permet pas de mettre en œuvre le même type de procédé pour une transmission vidéo qui serait basée sur un standard différent. En particulier, la sélection d'une image par l'opérateur au sein d'un flux vidéo transmis n'est pas prise en compte par ce protocole.
L'art antérieur, tel que décrit précédemment, ne permet pas de résoudre un certain nombre de problèmes, notamment la transmission d'informations haute résolution dans un réseau présentant un débit contraint. L'accès interactif à une image, ou à une zone d'une image, au sein d'un flux vidéo transmis en temps réel n'est pas non plus couvert par l'état de l'art.
L'art antérieur comprend, par ailleurs, les documents WO2007/078801 et WO 2004/114672.
Afin de répondre aux limitations de l'art antérieur, l'invention propose une nouvelle approche qui consiste à ne travailler que sur des images sous-résolues et sous-échantillonnées temporellement de façon intelligente afin de réduire au maximum la redondance et de s'adapter à la bande passante requise. La solution proposée permet également l'analyse de cette séquence sous-résolue de façon interactive via des requêtes effectuées par un opérateur distant. La présente invention est compatible des standards suivants. Le standard H.264 est défini par la norme ISO/IEC 14496-10. Le standard JPEG 2000 est défini par la norme ISO/IEC 15444-1. Le standard JPIP est défini par la norme ISO/IEC 15444-9.
A cet effet l'invention a pour objet un procédé de transmission en ligne d'une séquence vidéo haute résolution composée d'une succession de T images, caractérisé en ce qu'il comporte au moins une étape de sélection d'images pertinentes comprenant au moins les étapes suivantes :

➢ Etape 1 : Découper chaque image à transmettre à l'instant t en un nombre N de zones,

➢ Etape 2 : Pour chaque zone n déterminée à l'étape 1, calculer une valeur $v_n(t)$ représentative du contenu de ladite zone,

➢ Etape 3 : Pour chaque image $I(t)$ à transmettre, générer un vecteur $\mathbf{V}_N(t)$ de taille N représentatif du contenu de ladite image et contenant les valeurs obtenues à l'étape 2 pour chacune des zones déterminées à l'étape 1, $\mathbf{V}_N(t)$ = $[v_0(t),...,v_{N-1}(t)]^T$, $[.]^T$ étant l'opérateur de transposition d'un vecteur.

➢ Etape 4 : Calculer un coefficient de corrélation normalisé $\alpha$ entre le vecteur de référence $\mathbf{R}_N(k) = V_N(t_1) = [r_0(k),\Lambda\,,r_{N-1}(k)]^T$ déterminé pour une image précédemment sélectionnée à l'instant $t_1$ $I^{sel}(k\text{-}1) = I(t_1)$ et celui $V_N(t)$

$$\alpha = \frac{\mathbf{R}_N^T(k-1).\mathbf{V}_N(t)}{\sqrt{\mathbf{R}_N^T(k-1).\mathbf{R}_N(k-1)}.\sqrt{\mathbf{V}_N^T(t).\mathbf{V}_N(t)}},$$

où k est l'indice temporel d'une image sélectionnée. calculé pour l'image courante $I(t)$ via le calcul suivant :

➢ Etape 5 : Prendre une décision sur la sélection (ou pas) pour transmission de l'image courante $I(t)$ en comparant la valeur du coefficient de corrélation normalisé $\alpha$ à un ou plusieurs seuils de valeurs fixées à priori.

Dans une variante de réalisation de l'invention, la valeur $v_n(t)$ calculée à l'étape 2 est obtenue en calculant un des critères dérivés d'un histogramme contenant les valeurs de luminance ou de chrominance des pixels de la zone n de l'image $I(t)$ parmi lesquels, l'énergie, la variance, le coefficient d'amortissement (ou Kurtosis), le coefficient de dissymétrie (ou Skewness) ou le centre de gravité dudit histogramme, ou en effectuant une combinaison linéaire d'au moins deux de ces critères.

Dans une variante de réalisation de l'invention, l'étape de sélection d'images pertinentes comporte en plus les étapes suivantes :

➢ A partir de chaque couple de vecteurs $(R_N(k\text{-}1),V_N(t))$, obtenus pour le couple d'images $(I^{sel}(k\text{-}1),I(t))$, calculer un second vecteur $\Delta V_N(t) = (\Delta v_0(t),\cdots\Delta v_N(t))$ tel que

$\Delta v_n(t) = |v_n(t) - r_n(k\text{-}1)|^\beta$, $\beta$ étant un entier positif donné.

➢ Calculer la norme $\|\Delta V_N(t)\|$ du vecteur $\Delta V_N(t)$ et diviser ledit vecteur par ladite norme pour obtenir un troisième vecteur

$$\Delta V_N'(t) = \frac{\Delta V_N(t)}{\|\Delta V_N(t)\|} = (\Delta v_0'(t),\cdots,\Delta v_N'(t))$$

➢ Calculer le critère additionnel suivant afin de déterminer s'il y a répartition uniforme ou localisée des différences entre les deux images considérées :

○

$$DC = (\Delta V_N^{MAX} - \frac{1}{N})/(1 - \frac{1}{N}),$$

avec

$$\Delta V_N^{MAX} = MAX(\Delta v_n'(t)), 0 \le n < N,$$

○ appliquer le test suivant, si DC < $S_{DC}$, les différences entre les deux images considérées sont réparties uniformément, sinon elles sont localisées sur une zone donnée desdites images.

Dans une variante de réalisation de l'invention, l'étape 5 est mise en œuvre en effectuant un test de comparaison entre le coefficient de corrélation $\alpha$ et un seuil prédéfini S, entier strictement positif, de la façon suivante :

➢ si $\alpha$ < S, l'image courante $I(t)$ est sélectionnée, le vecteur de référence est mis à jour $\mathbf{R}_N(k) = \mathbf{V}_N(t)$ et l'indice d'image sélectionnée est incrémenté $k = k + 1$
➢ dans le cas contraire, l'image n'est pas retenue comme image pertinente.

Dans une variante de réalisation de l'invention, l'étape de sélection d'images pertinentes comporte les étapes supplémentaires suivantes :

➢ Définir un compteur d'images $cpt\_I$, initialisé à 1 lorsqu'une image pertinente est sélectionnée à l'étape 5 et incrémenté de 1 à chaque nouvelle image courante I(t) reçue ainsi qu'une valeur maximum dudit compteur $cpt\_I\_max$,
➢ Pour chaque image, effectuer le test de comparaison suivant : si $\alpha \geq$ S et $cpt\_I \geq cpt\_I\_max$, sélectionner la dite image comme pertinente.

Dans une variante de réalisation de l'invention, l'étape de sélection d'images pertinentes comporte les étapes supplémentaires suivantes :

➢ Définir un compteur d'images $cpt\_I$, initialisé à 1 lorsqu'une image pertinente est sélectionnée à l'étape 5 et incrémenté de 1 à chaque nouvelle image courante I(t) reçue et une valeur minimum dudit compteur $cpt\_I\_min$,
➢ Pour chaque image, effectuer le test de comparaison suivant : si $\alpha$ < S et $cpt\_I < cpt\_I\_min$, ne pas retenir ladite image comme pertinente.

Dans une variante de réalisation de l'invention, l'étape de sélection d'images pertinentes comporte les étapes supplémentaires suivantes :

➢ Définir un nombre $N_s$ souhaité d'images sélectionnées par seconde,
➢ Définir un intervalle de temps de durée égale à $T_h$ pour la mise à jour dudit seuil S.
➢ A chaque intervalle de temps de durée égale à $T_h$, calculer le nombre d'images $N$ sélectionnées par le procédé pendant ledit intervalle de temps de durée égale à $T_h$ précédent,
➢ A chaque intervalle de temps de durée égale à $T_h$, modifier la valeur du seuil S de la façon suivante :

Si

$$N < N_s, S = S - \delta S$$

Si $N > N_s$, S = S + $\delta$S, où $\delta$S est une valeur entière positive incrémentale fixée initialement et/ou ajustée dynamiquement

Dans une variante de réalisation de l'invention, l'étape 5 consiste à effectuer un test de comparaison entre le coefficient de corrélation $\alpha$ et un nombre J strictement positif de seuils prédéfinis $S_j$, $1 \leq j < J$, de la façon suivante :

➢ Si $0 \leq \alpha < S_1$, l'image courante est sélectionnée avec un degré de priorité maximum,
➢ Si $S_j \leq \alpha < S_{j+1}$, pour $1 \leq j < J-1$ l'image courante est sélectionnée avec un degré de priorité moyen j,
➢ Si $\alpha \geq S_J$, l'image n'est pas retenue comme pertinente, $S_j$ est un entier strictement positif.

Dans une variante de réalisation de l'invention, l'étape 5 est effectuée de la façon suivante :

➢ Trier les T images de ladite séquence vidéo par ordre croissant de la valeur de leur coefficient de corrélation $\alpha$,
➢ Grouper les T images triées en J+1 groupes hiérarchisés en fonction de la valeur de $\alpha$, chacun desdits groupes d'images comportant le même nombre d'images et correspondant à un degré de priorité moyen j'

Dans une variante de réalisation de l'invention, la séquence vidéo haute résolution est compressée avant transmission via les étapes suivantes :

➢ Effectuer un sous échantillonnage spatial dudit flux vidéo haute résolution afin d'obtenir une séquence vidéo de résolution inférieure,

➢ Appliquer l'étape de sélection d'images pertinentes à la séquence vidéo de résolution inférieure obtenue,

➢ Effectuer une compression de ladite séquence par un codeur vidéo adapté à générer une structure particulière de groupe d'images dans laquelle les images pertinentes sélectionnées définissent :

◦ une résolution temporelle, contenant l'ensemble des images pertinentes sélectionnées dans le cas où l'étape de sélection d'images pertinentes ne délivre qu'un groupe d'images pertinentes ayant toutes le même degré de priorité,

◦ plusieurs résolutions temporelles, contenant chacune les images pertinentes sélectionnées avec un degré de priorité différent, dans le cas où l'étape de sélection d'images pertinentes délivre plusieurs groupes d'images pertinentes avec des degrés de priorité différents.

Dans une variante de réalisation de l'invention, le codeur vidéo respecte le standard H.264.

Dans une variante de réalisation de l'invention, la séquence vidéo haute résolution à transmettre est sauvegardée dans une unité de stockage et qu'une image ou zone d'image de ladite séquence vidéo est sélectionnée afin d'être transmise ou retransmise selon les étapes suivantes :

➢ Effectuer un sur échantillonnage spatial de ladite image afin d'obtenir une image haute résolution,

➢ Calculer la différence entre l'image sur échantillonnée et celle correspondante préalablement stockée afin d'obtenir un résiduel,

➢ Compresser ledit résiduel via un codeur image afin de produire un flux compressé comportant au moins des paquets qui contiennent une information sur les hautes fréquences de l'image et d'autres paquets qui contiennent une information sur les basses fréquences de la dite image,

➢ Transmettre ledit flux compressé à un opérateur distant.

Dans une variante de réalisation de l'invention, l'image à retransmettre ou l'image associée à ladite zone d'image à retransmettre est comparée à ses images voisines temporellement au sein de ladite séquence vidéo haute résolution afin de déterminer laquelle est la moins floue selon les étapes suivantes :

➢ Calculer sur l'image ou la zone d'image sélectionnée un critère représentatif de la netteté de ladite image ou zone d'image, ledit critère de netteté présentant un premier extremum lorsque ladite image ou zone d'image est parfaitement nette et un second extremum opposé au premier lorsque ladite image ou zone d'image est totalement floue,

➢ Effectuer le même calcul sur les M images voisines temporellement, M étant une valeur prédéfinie,

➢ Sélectionner l'image la plus nette selon le critère précédent et retransmettre cette image ou la zone d'image associée, à la place de celle initialement sélectionnée.

Dans une variante de réalisation de l'invention, le codeur image est adapté à définir l'ordre d'envoi des paquets composant le flux compressé en fonction, au moins, d'une information de débit disponible pour la transmission et fixée à priori.

Dans une variante de réalisation de l'invention, le codeur image respecte le standard JPEG2000.

Dans une variante de réalisation de l'invention, la retransmission d'une image ou zone d'image se fait via une requête de l'opérateur distant.

Dans une variante de réalisation de l'invention, les requêtes et les réponses auxdites requêtes sont mises en œuvre via le standard JPIP.

L'invention a également pour objet un système interactif de transmission de séquences vidéo haute résolution caractérisé en ce qu'il comporte un émetteur et un récepteur comportant des moyens pour exécuter les étapes du procédé décrit précédemment.

D'autres caractéristiques et avantages du procédé et du dispositif selon l'invention apparaîtront mieux à la lecture de la description qui suit d'un exemple de réalisation donné à titre illustratif et nullement limitatif annexé des figures qui représentent :

➢ La figure 1 une illustration de la granularité temporelle dans un flux vidéo,

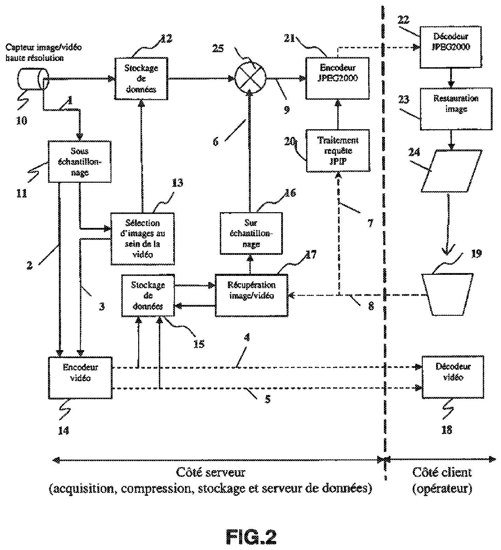

➢ La figure 2 un synoptique du système de transmission interactive d'images et vidéos sur un réseau bas débit selon l'invention,

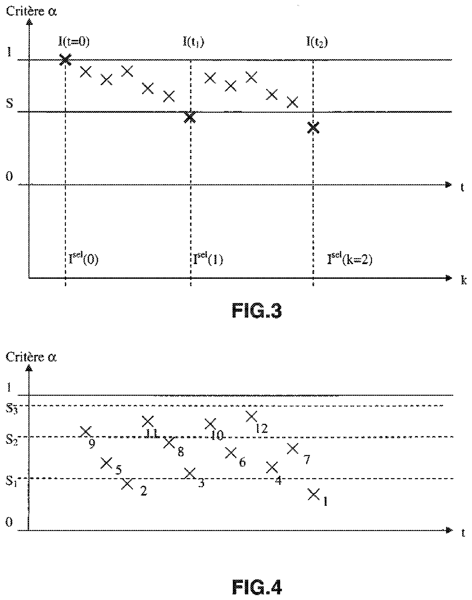

➢ La figure 3 une illustration du procédé de sélection d'images pertinentes selon l'invention,

➢ La figure 4 une illustration d'une variante de réalisation du procédé de sélection d'images pertinentes selon l'invention,

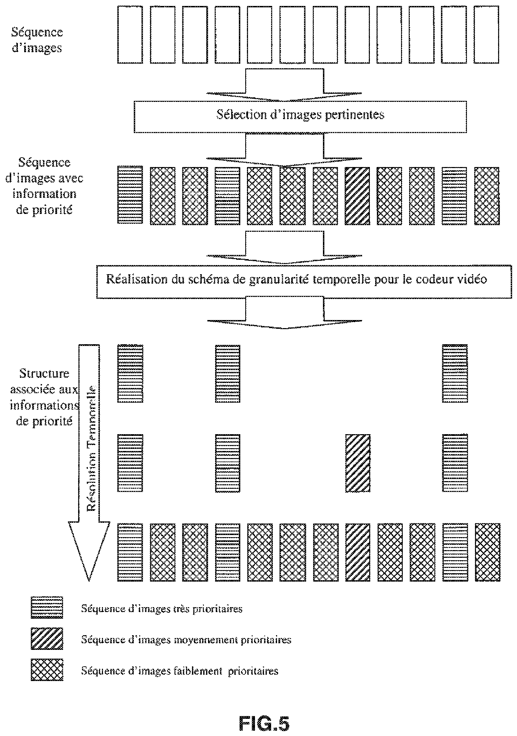

➢ La figure 5 une illustration d'un exemple de mise en forme d'un schéma de granularité temporelle avec une contrainte sur les images clefs,

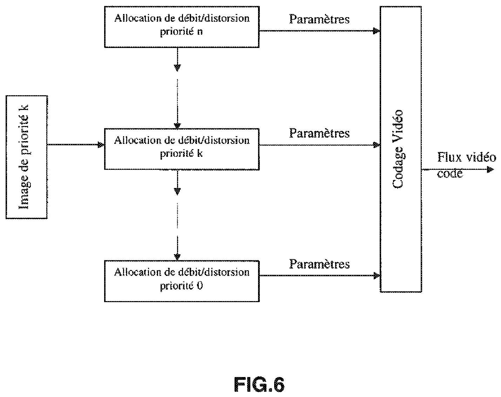

➢ La figure 6 une illustration d'allocation de débit et de distorsion pour chaque résolution temporelle,

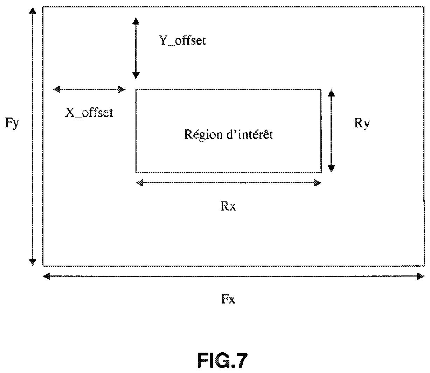

➢ La figure 7 une illustration d'une région d'intérêt dans une image.

La figure 2 représente un schéma du système global selon l'invention. Dans la partie gauche de la figure est illustré le système d'acquisition, compression, stockage et serveur de données. La partie droite de la figure correspond à l'opérateur ou expert distant qui réalise les requêtes vers l'émetteur. Les flèches en pointillés signifient qu'il y a transmission (soit de données vidéos ou images, soit de requêtes utilisateur) à travers un réseau à débit contraint connu. Une séquence vidéo haute résolution, 1, issue d'un capteur, 10, est tout d'abord sous échantillonnée spatialement, 11, afin de réduire la résolution initiale et indirectement le débit utile de la séquence à transmettre. Parallèlement, la séquence, 1, est également stockée localement dans une unité de stockage 12. Un procédé, selon l'invention, de sélection d'images pertinentes, 13, récupère le flux sous échantillonné, 2, afin de produire un résumé de la séquence vidéo, ceci en temps réel. Ce résumé permet de déterminer quelles sont les images clefs, 3, au sein de la séquence. Ladite séquence d'images clefs, 3, ainsi obtenue est une suite d'images dont le contenu entre chaque image diffère de façon significative. Pour chaque image transmise, le procédé de sélection, 13, détermine si elle est une image clef et fournit cette indication à l'encodeur vidéo 14. Ledit encodeur a donc à son entrée un flux sous échantillonné, 2, et une indication d'image clef, 3, et utilise ces deux sources d'information pour produire deux flux vidéos compressés. Le premier flux, 4, correspond à la résolution temporelle de base ou séquence basse-résolution, qui doit contenir, obligatoirement, les images clefs précédemment déterminées. Le second, 5, correspond au flux vidéo intégral, sous échantillonné spatialement puis encodé. Au moins un de ces deux flux est transmis, à travers un réseau à débit contraint, au décodeur vidéo, 18, distant qui effectue le décodage et génère une séquence vidéo décompressée qui peut être affichée. Le choix de transmettre l'un ou l'autre des flux disponibles dépend de l'opérateur et de la bande passante disponible. Le flux, 4, correspondant à la résolution temporelle de base sera transmis en priorité. Les deux flux compressés, sont également stockés dans une unité de stockage, 15, avant d'être transmis. Dans le cas d'utilisation d'un codeur vidéo de type H.264, seul le flux prioritaire, 4, est stocké.

Du coté de la réception, un opérateur, 19, peut effectuer plusieurs types de requêtes vers le serveur vidéo. Une première requête, 8, permet à l'opérateur de demander la retransmission d'une image spécifique ou l'ensemble des images clefs à la résolution d'origine (associée au capteur 10). Cette requête peut également s'effectuer sur une partie d'une image, afin d'effectuer un zoom sur un élément précis que l'opérateur souhaite afficher en haute résolution. La requête 8 est donc transmise à une étape 17 qui effectue la récupération de l'image, du groupe d'images ou de la partie d'image requise. L'image récupérée est donc décodée à partir du flux stocké dans l'unité de stockage 15 puis est sur-échantillonnée spatialement, 16, pour revenir à la résolution d'origine. La différence, 25, entre l'image (ou la partie d'image) haute résolution d'origine préalablement stockée dans l'unité, 12, et l'image (ou la partie d'image) sur-échantillonnée, 6, est calculée afin d'obtenir un résiduel, 9.

Ledit résiduel obtenu est ensuite compressé via un encodeur image, 21, respectant, par exemple, le standard JPEG2000. C'est ce résiduel qui est ensuite transmis à l'opérateur via, par exemple, l'utilisation du protocole bidirectionnel JPIP, 7. En réception, le flux est décodé progressivement via un décodeur image, 22, le résiduel décodé ainsi obtenu est communiqué à un module de restauration d'image, 23, qui à partir de ce résiduel et de la première image basse qualité et basse résolution qu'il a reçu (celle qui lui a permis de faire sa requête pour obtenir des informations complémentaires) fournit une image décompressée complète à l'opérateur. Ce dernier va ainsi être en mesure de reconstruire de façon progressive la partie de l'image qu'il souhaite analyser et ce jusqu'à sa pleine résolution et qualité maximale.

L'opérateur 19 peut interagir avec le système selon l'invention selon plusieurs scénarios. Par exemple, il souhaite la retransmission en haute résolution d'une image ou d'une zone d'image déjà transmise en basse résolution. L'opérateur 19 peut également requérir la transmission du flux vidéo ou des images hautes résolution entre deux images déjà transmises en basse résolution.

Le procédé, selon l'invention, de sélection d'images pertinentes, 13, permet de déterminer, en temps réel et en cours de transmission du flux vidéo, les images clefs de la séquence vidéo. L'ensemble de ces images représente un résumé de l'information de la séquence initiale haute résolution. Dans la suite de la description, les notations suivantes seront utilisées :

➢ $T$ est le nombre total d'images de la séquence vidéo traitée, $t$ est l'indice temporel associé à une image de ladite séquence,

➢ N est le nombre de zones de l'image déterminé par le procédé, n est l'indice d'une zone,

➢ K est le nombre d'images sélectionnées via le procédé parmi les T images disponibles, k est l'indice temporel associé à une image parmi l'ensemble des images sélectionnées.

➢ L'image courante de la séquence vidéo traitée est notée $I(t)$

Le procédé de sélection d'images pertinentes présente les étapes suivantes :

Etape 1 : Chaque image $I(t)$ reçue à l'instant t est découpée en un nombre N de zones qui peut varier, typiquement N est par exemple un nombre entier supérieur à 9.

Etape 2 : A chaque zone n est associée une valeur $v_n(t)$ représentative du contenu de cette zone de l'image et obtenue selon un critère précis.

Etape 3 : Un vecteur $V_N(t)$ de taille N représentatif du contenu de l'image $I(t)$ est généré en concaténant les valeurs obtenues à l'étape 2 pour chaque zone de l'image :

$$V_N(t) = \left[ v_0(t), \cdots, v_{N-1}(t) \right]^T$$

où $[.]^T$ est l'opérateur de transposition. Lorsqu'une image courante d'indice t est sélectionnée par le procédé de sélection d'images pertinentes, on met à jour un vecteur de référence :

$$R_N(k) = V_N(t) = \left[ r_0(k), \cdots, r_{N-1}(k) \right]^T$$

L'image sélectionnée est notée $I^{sel}(k) = I(t)$ et pour chaque nouvelle image sélectionnée par le procédé selon l'invention, k est incrémenté de 1 (k=k+1).

Etape 4 : Un coefficient de corrélation normalisé $\alpha$ est calculé entre le vecteur de référence $R_N(k-1)$ déterminé pour l'image précédemment sélectionnée $I^{sel}(k-1)$ et le vecteur $V_N(t)$ représentatif du contenu de l'image courante $I(t)$

$$\alpha = \frac{\mathbf{R}_N^T(k-1).\mathbf{V}_N(t)}{\sqrt{\mathbf{R}_N^T(k-1).\mathbf{R}_N(k-1)}.\sqrt{\mathbf{V}_N^T(t).\mathbf{V}_N(t)}}$$

ou encore

$$\alpha = \frac{\sum_{n=0}^{N-1} r_n(k-1).v_n(t)}{\sqrt{\sum_{n=0}^{N-1} r_n(k-1).r_n(k-1)}.\sqrt{\sum_{n=0}^{N-1} v_n(t).v_n(t)}}$$

Etape 5 : Un test de comparaison est effectué entre le coefficient de corrélation $\alpha$ et un seuil prédéfini S. Si $\alpha < S$, l'image courante $I(t)$ est sélectionnée, le vecteur de référence est mis à jour $R_N(k) = V_N(t)$ et l'indice k est incrémenté de 1. Dans le cas contraire, l'image n'est pas retenue comme pertinente.

Le procédé tel que mis en œuvre via les étapes 1 à 5 décrites précédemment est illustré à la figure 3. Le procédé est initialisé en sélectionnant la première image $I^{sel}(0) = I(t = 0)$ de la séquence puis une nouvelle image $I^{sel}(k) = I(t_1)$ est sélectionnée à chaque fois que son critère $\alpha$ associé est inférieur au seuil S.

Dans une variante de réalisation, on peut définir J seuils $S_j$ ($1 \le j \le J$ et $S_j < S_{j+1}$) afin de sélectionner J+1 groupes d'images. Lesdits groupes obtenus seront hiérarchisés en fonction de leur degré de priorité. Par exemple, pour J = 3, le groupe d'images tel que $0 \le \alpha < S_1$ est le plus prioritaire, le second groupe d'images dans l'ordre de priorité est celui obtenu pour $S_1 \le \alpha < S_2$ et ainsi de suite. Une autre possibilité pour obtenir J+1 groupes d'images consiste à diviser l'ensemble des images disponibles en J+1 groupes comportant chacun un nombre égal d'images, la distribution des images dans chaque groupe se fait par hiérarchisation des images en fonction de la valeur de leur critère $\alpha$ associé. La figure 4 illustre cette variante de réalisation dans le cas où 12 images sont initialement disponibles. Trois groupes d'images sont définis par le procédé de sélection selon l'invention. Dans un cas, les seuils $S_1, S_2$ et $S_3$ sont utilisés pour déterminer la répartition des images dans les trois groupes. Le groupe 1 contient les images (représentées par leur index temporel) {1,2}, le groupe 2 contient les images {3,4,5,6,7,8} et le groupe 3 contient les images {9,10,11,12}. Dans le second cas, les images sont hiérarchisées en fonction de la valeur de leur critère $\alpha$ et sont regroupées en trois groupes contenant autant d'éléments chacun. Le groupe 1 contient alors les images {1,2,3,4}, le groupe 2 contient les images {5,6,7,8} et le groupe 3 contient les images {9,10,11,12}.

La valeur $v_n(t)$ représentative du contenu d'une zone n d'une image reçue à l'instant t ainsi que le vecteur représentatif de ladite image $v_N(t)$ peuvent être calculés selon différents critères tels que décrits dans la suite de ce paragraphe.

Un critère possible est un critère basé sur la luminance moyenne de l'image. Dans ce cas, chaque valeur $v_n(t)$ est égale à la valeur moyenne de la luminance calculée sur la zone n de l'image $I(t)$. Ce critère est utilisable mais sa performance est fortement conditionnée au pas de quantification utilisé pour la fonction de distribution de la luminance. Le procédé selon l'invention permet d'améliorer les performances de ce critère en modélisant plus finement la distribution de la luminance en utilisant, par exemple, une modélisation à partir de plusieurs fonctions Gaussiennes. Le modèle utilisé pour cela est un modèle de mélanges gaussiens, ou « Gaussian Mixture Model » (GMM) en anglais, connu de l'Homme du métier. L'estimation de ce modèle peut se faire avec un algorithme espérance-maximisation connu sous le terme anglo saxon « Expectation-Maximisation » (EM). Les coefficients obtenus via cet algorithme peuvent soit être utilisés directement comme valeurs $v_n(t)$ sans pondération particulière, soit pondérés en utilisant les poids associés à chaque Gaussienne et déterminés par l'algorithme EM. Enfin, le nombre de Gaussiennes utilisées peut être fixé a priori ou estimé de façon dynamique par un critère d'information connu. Cependant la méthode GMM étant complexe à mettre en œuvre, l'invention propose de modéliser la distribution de la luminance par un histogramme. Le dit histogramme est calculé de manière classique, en utilisant soit la résolution initiale de la luminance, c'est-à-dire le nombre de valeurs que peut prendre la luminance sur une image soit une résolution inférieure en regroupant plusieurs valeurs voisines. Une fois cet histogramme construit, plusieurs critères peuvent en dériver tels que, par exemple, l'énergie, la variance, le centre de gravité, le coefficient d'aplatissement (plus connu sous le terme Kurtosis) ou le coefficient de dissymétrie (connu sous le terme anglo saxon Skewness). Ces paramètres permettent de caractériser plus ou moins finement la distribution de la luminance.

La valeur $v_n(t)$ représentative d'une zone de l'image peut être diverse. Elle dépend de l'application. Elle peut être basée sur la luminance, communément notée Y, sur les chrominances, communément notées Cr et Cb, ou sur une combinaison linéaire de la luminance et des chrominances Les coefficients de la combinaison linéaire sont déterminés de façon à représenter au mieux le contenu de la zone n de l'image pour une application visée. D'une façon similaire, la valeur $v_n(t)$, au lieu d'être basée sur les composantes YCrCb de l'image, peut être basée sur les composantes des différents espaces de couleur connu par l'Homme du Métier (RGB, LUV, Lab,...). D'une manière générale, cette valeur représentative peut également résulter d'une transformation appliquée sur les composantes de l'image. Cette transformation a, dans ce cas, comme objectif de mettre en exergue une caractéristique de l'image intéressante pour l'application visée, comme par exemple la texture.

Enfin, un critère additionnel au vecteur représentatif $V_N(t)$ peut être mis en place afin de déterminer si la différence estimée (via le vecteur $V_N(t)$) entre l'image courante et l'image de référence est répartie uniformément sur l'ensemble de l'image ou localisée sur une zone de cette image uniquement. A partir d'un des critères précédemment proposés, un vecteur représentatif $V_N(t)$ est disponible pour l'image courante, ainsi qu'un vecteur de référence $R_N(k-1)$ correspondant à la dernière image sélectionnée. Chaque composante d'un vecteur représente une zone de l'image. Un troisième vecteur $\Delta V_N(t) = (\Delta v_0(t), \cdots, \Delta v_N(t))$ peut être calculé, avec $\Delta v_n(t) = |v_n(t) - r_n(k-1)|^\beta$, $\beta \geq 0$ la valeur absolue, éventuellement élevée à une puissance $\beta$, des différences des composantes des vecteurs. La valeur de la puissance $\beta$ peut être déterminée par simulation. Le vecteur $\Delta V_N(t)$ ainsi obtenu est ensuite normé. La répartition des différences entre les deux images peut alors s'interpréter en observant l'homogénéité des composantes du vecteur normé : si la répartition des différences est parfaitement uniforme, toutes les composantes du vecteur sont égales à 1/N où N est la taille du vecteur (égal au nombre de zones de l'image considérées), et si les différences sont parfaitement localisées sur une seule zone, toutes les composantes du vecteur sont nulles sauf une. Un critère normalisé est alors défini permettant de donner une information sur l'homogénéité ou la localisation des différences entre deux images consécutives. Ledit critère utilise deux valeurs :➢

$$\Delta V_N{}^{MAX} = MAX(\Delta v_n(t)), 0 \leq n < N$$

➢

$$DC = (\Delta V_N{}^{MAX} - \frac{1}{N})/(1 - \frac{1}{N})$$

S'il y a répartition uniforme des différences entre l'image courante et l'image de référence, $\Delta V_N{}^{MAX} = \frac{1}{N}$ et $DC = 0$
S'il y a localisation des différences sur une zone donnée,

$$\Delta V_N{}^{MAX} = 1 \text{ et } DC = 1.$$

Le critère additionnel consiste à comparer la valeur de la variable DC à un seuil prédéfini, $S_{DC}$ compris entre 0 et 1 et dont la valeur est déterminée en fonction du scénario d'utilisation. Si $DC < S_{DC}$, alors on conclue à la répartition uniforme des différences entre l'image courante et l'image de référence, dans le cas contraire, on conclue à la localisation des différences sur une zone donnée.

Ce critère additionnel peut être mis en œuvre notamment dans le cas d'utilisation d'un capteur en position fixe, pour lequel on cherche à sélectionner une image sur une différence localisée, même si le critère initial n'active pas la sélection.

Dans une variante de réalisation, il est possible de contraindre le système à sélectionner une image même si le coefficient de corrélation $\alpha$ demeure au-dessus du seuil S en utilisant un compteur d'images *cpt_I*. Ce compteur est incrémenté à chaque image reçue, et est remis à un lorsqu'une image pertinente est sélectionnée. Le procédé consiste à fixer une valeur maximale *cpt_I_max* pour ledit compteur. Lorsque le compteur atteint cette valeur maximale, l'image courante *I(t)* est sélectionnée même si le critère défini à l'étape 5 n'est pas vérifié.

D'une façon analogue, il est possible de fixer une valeur minimale *cpt_I_min* pour le compteur d'images. Si l'image courante rempli le critère de sélection (étape 5) mais que le compteur d'images *cpt_I* n'a pas dépassé la valeur minimale prédéfinie, l'image courante *I(t)* n'est pas sélectionnée. Cette variante de réalisation présente notamment l'avantage de répondre à des contraintes de débit plus importantes sur le lien de transmission.

Dans une autre variante de réalisation, le seuil S utilisé pour mettre en œuvre le critère de sélection d'une image pertinente peut être rendu adaptatif. En particulier, le seuil S peut varier au cours du temps en fonction, par exemple, d'une contrainte de débit moyen. L'adaptation du seuil au cours du temps peut être réalisée en utilisant un algorithme de type gradient, connu de l'Homme du métier, qui vise à minimiser la différence entre le nombre d'images $N$ sélectionnées, via l'étape 5, par seconde et le nombre souhaité $N_s$ d'images sélectionnées par seconde.

On définit un horizon de temps $T_h$ au bout duquel une mise à jour du seuil S est effectué. Par exemple, mais pas uniquement, cet horizon de temps $T_h$ est pris égal à une seconde.

A chaque intervalle de temps $T_h$, un test de comparaison est effectué, et le seuil S est modifié comme suit :

Si

$$N < N_s, \quad S = S - \delta S$$

Si $N > N_s$, $S = S + \delta S$, où $\delta S$ est un incrément fixé initialement qui correspond au pas d'adaptation.

Le pas d'adaptation $\delta S$ peut également être ajusté dynamiquement au cours du temps.
De plus, une valeur minimum et une valeur maximum dudit seuil S sont fixées afin d'éviter les problèmes de divergence, si $S < Smin$ alors $S = Smin$, si $S > Smax$ alors $S = Smax$.
La valeur de l'incrément $\delta S$ peut être adaptée en fonction de la valeur absolue de l'erreur $E = |N - N_S|$ Un exemple simple de fonction est une fonction linéaire avec saturation définie par :
$\delta S = \delta Smax$ si $|N - N_S| > E\_max$, $\delta S = \delta Smin$ si $|N - N_S| < E\_min$,
$\delta S$ est interpolé linéairement entre $\delta Smin$ et $\delta Smax$, si $E\_min \leq |N - N_S| \leq E\_max$, où $\delta Smax$, $\delta Smin$, $E\_max$ et $E\_min$ sont des données d'entrée.

Les images clefs sélectionnées par le procédé décrit précédemment doivent être transmises avec une priorité maximale. Le codeur vidéo, 14, adapté à mettre en œuvre le procédé selon l'invention, utilise lesdites images clefs définies par l'étape précédente pour générer une structure particulière de groupe d'images, ou en anglais, « Group of Pictures » (GOP). Le fait que les images clefs soient définies à la volée au cours de la transmission du flux vidéo impose au codeur vidéo d'adapter les structures des GOP de façon dynamique. Le flux compressé obtenu en sortie du codeur vidéo sera composé de plusieurs résolutions temporelles, la résolution minimale devant contenir impérativement l'ensemble des images clefs et devant également être compressée de façon à assurer la meilleure qualité en regard du débit disponible sur le canal de transmission. La résolution temporelle qui comporte les images clefs doit être reçue en priorité par l'opérateur. La figure 5 illustre un exemple de mise en forme d'un schéma de granularité temporelle sous contrainte de priorité sur certaines images préalablement identifiées comme pertinentes. La contrainte imposée au codeur vidéo réside dans le fait que chaque image codée appartenant à une résolution temporelle donnée ne peut pas être prédite à partir d'une image codée appartenant aux résolutions temporelles supérieures.

Dans le mode de réalisation où le module de sélection d'images pertinentes fournit un degré de priorité définissant plusieurs classes d'images clefs, et non plus une seule, le codeur vidéo générera alors plusieurs résolutions temporelles, hiérarchisées en fonction du degré de priorité des images clefs. Une fois que la structure d'un GOP est définie, le codeur, pour chaque résolution temporelle définit une allocation en débit et en distorsion spécifique qui doit permettre de répondre aux contraintes imposées par la transmission, en termes de débit disponible notamment. Cette allocation permet, pour chaque type d'image reçue (image clef ou image moins prioritaire) de déterminer le type de codage à appliquer, en particulier codage spatial ou codage par prédiction d'une autre trame. La figure 6 illustre schématiquement ce principe.

Les requêtes effectuées par l'opérateur pour interagir avec le système selon l'invention peuvent respecter le protocole de communications JPIP. A cet effet, un rappel des fonctionnalités de ce protocole est effectué avant d'introduire l'adaptation qui en est faite dans le cadre de l'invention. L'architecture typique d'un système JPIP se compose de plusieurs clients communiquant avec un serveur. L'application cliente dispose d'une interface graphique où s'affiche l'image décodée et l'application serveur renvoie des données lorsque le client modifie, par un zoom ou un déplacement, sa zone de visualisation. La communication entre le client et le serveur se compose d'une succession de requêtes et de réponses. La requête définit les paramètres de la zone de visualisation (tels que la résolution, la taille ou la position de la fenêtre de zoom) de façon complètement transparente par rapport à la syntaxe du standard JPEG2000. Une des propriétés du protocole JPIP est de fournir des portions d'images JPEG2000 connues par l'Homme du métier sous le terme régions d'intérêt, en réponse à une requête du client. Trois couples de paramètres permettent de définir une région d'intérêt comme illustré par la figure 7. Le premier couple de paramètres (Fx et Fy) permet de définir la résolution à laquelle on souhaite l'image, ou la partie de l'image. Les deux autres couples de paramètres vont s'appliquer pour cette résolution. (X_offset et Y_offset) sont les paramètres de position de la partie d'image souhaitée au sein de la résolution définie par le couple (Fx,Fy) et (Rx , Ry) définissent sa taille également au sein de la résolution définie par le couple (Fx,Fy).

De façon classique, en réponse à une requête JPIP, le serveur JPEG2000 transmet en priorité les basses fréquences contenues dans l'image puis les hautes fréquences de façon incrémentale. Dans la mise en œuvre du système selon l'invention, le protocole JPIP est appliqué à une image résiduelle, 9, obtenue par les étapes illustrées sur la figure 2. Dans ce cas, les basses fréquences ont déjà été envoyées partiellement ou complètement dans le flux vidéo transmis, 5. Il est donc judicieux d'envoyer en priorité les hautes fréquences de l'image correspondant à la résolution requise par l'opérateur d'autant plus qu'elles contiennent d'avantage d'informations. Cependant, la contrainte de débit imposée au codeur vidéo doit également être prise en compte. En effet plus le débit de la séquence contenant les images clefs est faible plus les hautes fréquences seront détériorées et dans le pire cas, les basses fréquences peuvent également être endommagées. Dans ce cas, il est nécessaire d'envoyer d'abord les résidus des basses fréquences avant d'envoyer les hautes fréquences correspondant à la requête utilisateur. Le module JPIP utilisé dans le cadre de l'invention est donc adapté afin de déterminer l'ordre d'envoi des paquets JPEG2000 en fonction du débit alloué par le codeur vidéo et des paramètres de résolution, qualité et zone spatiale demandés par l'opérateur. L'objectif est de réduire au maximum le temps de transmission, ce qui permettra à l'opérateur de prendre une décision rapide.

Dans une variante de réalisation, l'opérateur peut préciser, lors de sa requête, qu'il souhaite effectuer une recherche au voisinage de l'image sélectionnée pour être retransmise. Cette recherche a pour but de trouver, éventuellement, une image dont le contenu est proche mais qui sera plus pertinente selon un critère de netteté. Dans ce cas, les étapes suivantes sont mises en œuvre lors de la requête de l'opérateur :

> Un calcul sur la zone sélectionnée (par l'opérateur) de l'image sélectionnée d'un critère représentatif de la netteté de ladite zone est effectué.
> Le même calcul est appliqué sur les mêmes zones des images situées dans un voisinage temporel proche de l'image sélectionnée.
> L'image dont la zone sélectionnée est la plus nette selon le critère choisi est sélectionnée et récupérée via l'étape 17 (figure 2). Elle est ensuite traitée par la suite du procédé selon l'invention décrite précédemment et illustré par la figure 2.

Le critère de netteté utilisé peut être, par exemple, basé sur un principe similaire à celui pouvant être utilisé pour réaliser une fonction d'autofocus au niveau du zoom optique d'un appareil photo ou d'une caméra. Un critère, connu de l'Homme du métier, tel que celui décrit dans l'article suivant : « Autofocusing Algorithm Selection in Computer Microscopy », Yu Sun, S. Duthaler and B. J. Nelson, In Proceedings of IEEE IROS (International Conference on Intelligent Robots and Systems), pp 70-76, 2005 peut être utilisé. Un tel critère de netteté doit pour être efficace présenter une valeur maximum (respectivement minimum) lorsque l'image ou la zone d'image sur laquelle est appliqué ce critère est parfaitement nette, et à l'opposé il doit présenter une valeur décroissante (respectivement croissante) au fur et à mesure que l'image ou la zone d'image devient moins nette.

Le système et le procédé selon l'invention présentent notamment les avantages suivants :

➢ La séquence haute résolution à transmettre est adaptée aux contraintes du medium de transmission en effectuant une sélection des informations les plus pertinentes pour l'utilisateur final.

➢ L'opérateur peut, grâce à des requêtes interactives, obtenir des informations temporelles ou spatiales supplémentaires à celles qu'il a reçu initialement.

➢ Tous les traitements effectués sont compatibles du temps-réel et nécessitent des ressources systèmes faibles, de plus le temps de latence introduit est minimal.

➢ L'ensemble du système proposé permet de s'adapter aux contraintes de débit, sans pour autant sacrifier la résolution et la qualité des images auxquelles l'opérateur peut avoir accès.

**Revendications**

1. Procédé de transmission en ligne d'une séquence vidéo haute résolution composée d'une succession de T images, **caractérisé en ce qu'**il comporte au moins une étape de sélection d'images pertinentes (13) comprenant au moins les étapes suivantes :

➢ Etape 1 : Découper chaque image à transmettre à l'instant t en un nombre N de zones,

➢ Etape 2 : Pour chaque zone n déterminée à l'étape 1, calculer une valeur $v_n(t)$ représentative du contenu de ladite zone,

➢ Etape 3 : Pour chaque image $I(t)$ à transmettre, générer un vecteur $\mathbf{V}_N(t)$ de taille N représentatif du contenu de ladite image et contenant les valeurs obtenues à l'étape 2 pour chacune des zones déterminées à l'étape 1, $\mathbf{V}_N(t) = [v_0(t),...,v_{N-1}(t)]^T$, $[.]^T$ étant l'opérateur de transposition d'un vecteur,

➢ Etape 4 : Calculer un coefficient de corrélation normalisé $\alpha$ entre le vecteur de référence $R_N(k)=V_N(t_1)=[r_0(k),...,r_{N-1}(k)]^T$ déterminé pour une image précédemment sélectionnée à l'instant $t_1$ $I^{sel}(k-1) = I(t_1)$ et celui $\mathbf{V}_N(t)$ calculé pour l'image courante $I(t)$ via le calcul suivant :

$$\alpha = \frac{\mathbf{R}_N^T(k-1).\mathbf{V}_N(t)}{\sqrt{\mathbf{R}_N^T(k-1).\mathbf{R}_N(k-1)}.\sqrt{\mathbf{V}_N^T(t).\mathbf{V}_N(t)}},$$

où k est l'indice temporel d'une image sélectionnée,

➢ Etape 5 : Prendre une décision sur la sélection (ou pas) pour transmission de l'image courante $I(t)$ en comparant la valeur du coefficient de corrélation normalisé $\alpha$ à un ou plusieurs seuils de valeurs fixées à priori,

➢ Etape 6 : Transmettre une séquence sous-échantillonnée comprenant uniquement les images sélectionnées, pour au moins une image sélectionnée,

∘ Rechercher, dans un voisinage temporel de l'image sélectionnée, une image plus nette que l'image sélectionnée,
∘ retransmettre l'image plus nette.

2. Procédé selon la revendication 1, **caractérisé en ce que** la valeur $v_n(t)$ calculée à l'étape 2 est obtenue en calculant un des critères dérivés d'un histogramme contenant les valeurs de luminance ou de chrominance des pixels de la zone n de l'image $I(t)$ parmi lesquels, l'énergie, la variance, le coefficient d'amortissement (ou Kurtosis), le coefficient de dissymétrie (ou Skewness) ou le centre de gravité dudit histogramme, ou en effectuant une combinaison linéaire d'au moins deux de ces critères.

3. Procédé selon l'une des revendications 1 à 2, **caractérisé en ce que** l'étape de sélection d'images pertinentes (13) comporte en plus les étapes suivantes :

➢ A partir de chaque couple de vecteurs $(R_N(k-1),V_N(t))$, obtenus pour le couple d'images $(I^{sel}(k-1),I(t))$,

calculer un second vecteur $\Delta V_N(t)=(\Delta v_0(t),...,\Delta v_N(t))$ tel que $\Delta v_n(t) =| v_n(t) - r_n(k - 1)|^\beta$, $\beta$ étant un entier positif donné,

➢ Calculer la norme $\|\Delta V_N(t)\|$ du vecteur $\Delta V_N(t)$ et diviser ledit vecteur par ladite norme pour obtenir un troisième vecteur $\Delta V'_N(t) = \Delta V_N(t)/\|\Delta V_N(t)\| = (\Delta v'_0(t),...,\Delta v'_N(t))$,

➢ Calculer le critère additionnel suivant afin de déterminer s'il y a répartition uniforme ou localisée des différences entre les deux images considérées :

○

$$DC = (\Delta V_N^{MAX} - \frac{1}{N})/(1-\frac{1}{N}) ,$$

avec

$$\Delta V_N^{MAX} = MAX(\Delta v'_n(t)), 0 \le n < N ,$$

○ appliquer le test suivant, si DC < $S_{DC}$, les différences entre les deux images considérées sont réparties uniformément, sinon elles sont localisées sur une zone donnée desdites images.

4. Procédé selon l'une des revendications 1 à 3, **caractérisé en ce que** l'étape 5 est mise en œuvre en effectuant un test de comparaison entre le coefficient de corrélation $\alpha$ et un seuil prédéfini S, entier strictement positif, de la façon suivante :

> si $\alpha$ < S, l'image courante I(t) est sélectionnée, le vecteur de référence est mis à jour $R_N(k) = V_N(t)$ et l'indice d'image sélectionnée est incrémenté $k = k + 1$
> dans le cas contraire, l'image n'est pas retenue comme image pertinente.

5. Procédé selon les revendications 1 à 4, **caractérisé en ce que** l'étape de sélection d'images pertinentes (13) comporte les étapes supplémentaires suivantes :

> Définir un compteur d'images $cpt\_I,$ initialisé à 1 lorsqu'une image pertinente est sélectionnée à l'étape 5 et incrémenté de 1 à chaque nouvelle image courante I(t) reçue ainsi qu'une valeur maximum dudit compteur $cpt\_I\_max,$
> Pour chaque image, effectuer le test de comparaison suivant : si $\alpha \ge S$ et $cpt\_I \ge cpt\_I\_max$, sélectionner la dite image comme pertinente.

6. Procédé selon les revendications 1 à 4, **caractérisé en ce que** l'étape de sélection d'images pertinentes (13) comporte les étapes supplémentaires suivantes :

➢ Définir un compteur d'images $cpt\_I,$ initialisé à 1 lorsqu'une image pertinente est sélectionnée à l'étape 5 et incrémenté de 1 à chaque nouvelle image courante I(t) reçue et une valeur minimum dudit compteur $cpt\_I\_min,$
➢ Pour chaque image, effectuer le test de comparaison suivant : si $\alpha$ < S et $cpt\_I < cpt\_I\_min,$ ne pas retenir ladite image comme pertinente.

7. Procédé selon les revendications 1 à 6, **caractérisé en ce que** l'étape de sélection d'images pertinentes (13) comporte les étapes supplémentaires suivantes :

➢ Définir un nombre $N_s$ souhaité d'images sélectionnées par seconde,
➢ Définir un intervalle de temps de durée égale à $T_h$ pour la mise à jour dudit seuil S.
➢ A chaque intervalle de temps de durée égale à $T_h$, calculer le nombre d'images $N$ sélectionnées par le procédé pendant ledit intervalle de temps de durée égale à $T_h$ précédent,
➢ A chaque intervalle de temps de durée égale à $T_h$, modifier la valeur du seuil S de la façon suivante :

Si

$$N < N_s, \; S = S - \delta S$$

Si $N > N_s$, S= S + $\delta$S, où $\delta$S est une valeur entière positive incrémentale fixée initialement et/ou ajustée dynamiquement

**8.** Procédé selon les revendications 1 à 3 **caractérisé en ce que** l'étape 5 consiste à effectuer un test de comparaison entre le coefficient de corrélation $\alpha$ et un nombre J strictement positif de seuils prédéfinis $S_j$, $1 \leq j < J$, de la façon suivante :

➢ Si $0 \leq \alpha < S_1$, l'image courante est sélectionnée avec un degré de priorité maximum,

➢ Si $S_j \leq \alpha < S_{j+1}$, pour $1 \leq j < J-1$ l'image courante est sélectionnée avec un degré de priorité moyen j,

➢ Si $\alpha \geq S_J$, l'image n'est pas retenue comme pertinente, $S_j$ est un entier strictement positif.

**9.** Procédé selon les revendications 1 à 3 **caractérisé en ce que** l'étape 5 est effectuée de la façon suivante :

➢ Trier les T images de ladite séquence vidéo par ordre croissant de la valeur de leur coefficient de corrélation $\alpha$,

➢ Grouper les T images triées en J+1 groupes hiérarchisés en fonction de la valeur de $\alpha$, chacun desdits groupes d'images comportant le même nombre d'images et correspondant à un degré de priorité moyen j'

**10.** Procédé selon l'une des revendications 8 ou 9 **caractérisé en ce que** la séquence vidéo haute résolution est compressée avant transmission via les étapes suivantes :

➢ Effectuer un sous échantillonnage spatial (11) dudit flux vidéo haute résolution afin d'obtenir une séquence vidéo de résolution inférieure (2),

➢ Appliquer l'étape de sélection d'images pertinentes (13) à la séquence vidéo de résolution inférieure obtenue,

➢ Effectuer une compression de ladite séquence (2) par un codeur vidéo (14) adapté à générer une structure particulière de groupe d'images dans laquelle les images pertinentes sélectionnées définissent :

◦ une résolution temporelle, contenant l'ensemble des images pertinentes sélectionnées dans le cas où l'étape de sélection d'images pertinentes (13) ne délivre qu'un groupe d'images pertinentes ayant toutes le même degré de priorité,

◦ plusieurs résolutions temporelles, contenant chacune les images pertinentes sélectionnées avec un degré de priorité différent, dans le cas où l'étape de sélection d'images pertinentes (13) délivre plusieurs groupes d'images pertinentes avec des degrés de priorité différents.

**11.** Procédé selon la revendication 10 **caractérisé en ce que** le codeur vidéo (14) respecte le standard H.264.

**12.** Procédé selon l'une des revendications 10 ou 11 **caractérisé en ce que** la séquence vidéo haute résolution à transmettre est sauvegardée dans une unité de stockage (12) et qu'une image ou zone d'image de ladite séquence vidéo est sélectionnée afin d'être transmise ou retransmise selon les étapes suivantes :

➢ Effectuer un sur échantillonnage spatial (16) de ladite image afin d'obtenir une image haute résolution (6),

➢ Calculer la différence entre l'image sur échantillonnée (6) et celle correspondante préalablement stockée (12) afin d'obtenir un résiduel (9),

➢ Compresser ledit résiduel (9) via un codeur image (21) afin de produire un flux compressé comportant au moins des paquets qui contiennent une information sur les hautes fréquences de l'image (12) et d'autres paquets qui contiennent une information sur les basses fréquences de la dite image,

➢ Transmettre ledit flux compressé à un opérateur distant (19).

**13.** Procédé selon la revendication 12 **caractérisé en ce que** l'image à retransmettre ou l'image associée à ladite zone d'image à retransmettre est comparée à ses images voisines temporellement au sein de ladite séquence vidéo haute résolution afin de déterminer laquelle est la moins floue selon les étapes suivantes :

➢ Calculer sur l'image ou la zone d'image sélectionnée un critère représentatif de la netteté de ladite image ou zone d'image, ledit critère de netteté présentant un premier extremum lorsque ladite image ou zone d'image est parfaitement nette et un second extremum opposé au premier lorsque ladite image ou zone d'image est totalement floue,

➢ Effectuer le même calcul sur les M images voisines temporellement, M étant une valeur prédéfinie,

➢ Sélectionner l'image la plus nette selon le critère précédent et retransmettre cette image ou la zone d'image associée, à la place de celle initialement sélectionnée.

**14.** Procédé selon l'une des revendications 12 ou 13 **caractérisé en ce que** le codeur image (21) est adapté à définir l'ordre d'envoi des paquets composant le flux compressé en fonction, au moins, d'une information de débit disponible pour la transmission et fixée à priori (14).

**15.** Procédé selon l'une des revendications 12 à 14 **caractérisé en ce que** le codeur image (21) respecte le standard JPEG2000.

**16.** Procédé selon l'une des revendications 12 à 15 **caractérisé en ce que** la retransmission d'une image ou zone d'image se fait via une requête (8) de l'opérateur distant.

**17.** Procédé selon la revendication 16 **caractérisé en ce que** les requêtes (8) et les réponses auxdites requêtes sont mises en œuvre via le standard JPIP.

**18.** Système interactif de transmission de séquences vidéo haute résolution **caractérisé en ce qu'**il comporte un émetteur et un récepteur comportant des moyens pour exécuter les étapes du procédé selon l'une des revendications 1 à 17.

## Patentansprüche

**1.** Verfahren zur Online-Übertragung einer Videosequenz mit hoher Auflösung, bestehend aus einer Folge von T Bildern, **dadurch gekennzeichnet, dass** es wenigstens einen Schritt des Auswählens von relevanten Bildern (13) beinhaltet, das wenigstens die folgenden Schritte beinhaltet:

➢ Schritt 1: Unterteilen jedes zu übertragenden Bildes zum Zeitpunkt t in eine Anzahl N von Zonen,

➢ Schritt 2: Berechnen, für jede in Schritt 1 bestimmte Zone n, eines Wertes $v_n(t)$, der Inhalt der Zone repräsentiert,

➢ Schritt 3: Erzeugen, für jedes zu übertragende Bild $I(t)$, eines Vektors $V_N(t)$ der Größe N, der Inhalt des Bildes repräsentiert und die in Schritt 2 erhaltenen Werte für jede der in Schritt 1 bestimmten Zonen enthält, wobei $\mathbf{V}_N(t)=[v_0(t),...,v_{N-1}(t)]^T$, $[.]^T$ der Umsetzungsoperator eines Vektors ist,

➢ Schritt 4: Berechnen eines normalisierten Korrelationskoeffizienten $\alpha$ zwischen dem Referenzvektor $R_N(k)=V_N(t_1)=[r_0(k),...,r_{N-1}(k)]^T$, bestimmt für ein zuvor zum Zeitpunkt $t_1 I^{sel}(k - 1) = I(t_1)$ ausgewähltes Bild und dem Vektor $V_N(t)$, berechnet für das laufende Bild $I(t)$ durch die folgende Berechnung:

$$\alpha = \frac{\mathbf{R}_N^T(k-1)\mathbf{V}_N(t)}{\sqrt{\mathbf{R}_N^T(k-1)\mathbf{R}_N(k-1)}\sqrt{\mathbf{V}_N^T(t)\mathbf{V}_N(t)}} ;$$

wobei k der zeitliche Index eines ausgewählten Bildes ist,

➢ Schritt 5: Treffen einer Entscheidung in Bezug auf die Auswahl (oder nicht) zum Übertragen des aktuellen Bildes $I(t)$ durch Vergleichen des Wertes des normalisierten Korrelationskoeffizienten $\alpha$ mit einem oder mehreren zuvor festgelegten Werteschwellen,

➢ Schritt 6: Übertragen einer unterabgetasteten Sequenz, die nur die ausgewählten Bilder umfasst,

➢ für wenigstens ein ausgewähltes Bild:

  ◦ Suchen, in einer zeitlichen Nachbarschaft des ausgewählten Bildes, eines schärferen Bildes als das ausgewählte Bild,
  ◦ erneutes Übertragen des schärferen Bildes.

**2.** Verfahren nach Anspruch 1, **dadurch gekennzeichnet, dass** der in Schritt 2 berechnete Wert $v_n(t)$ durch Berechnen von einem der abgeleiteten Kriterien eines Histogramms erhalten wird, das die Luminanz- oder Chrominanzwerte von Pixeln der Zone n des Bildes $I(t)$ enthält, darunter die Energie, die Varianz, der Dämpfungskoeffizient (oder Kurtosis), der Dissymmetriekoeffizient (oder Skewness) oder der Schwerpunkt des Histogramms, oder durch Durchführen einer linearen Kombination von wenigstens zwei dieser Kriterien.

**3.** Verfahren nach einem der Ansprüche 1 bis 2, **dadurch gekennzeichnet, dass** der Schritt des Auswählens von relevanten Bildern (13) ferner die folgenden Schritte beinhaltet:

> ➢ Berechnen, auf der Basis jedes für das Bildpaar ($I^{sel}(k - 1)$, $I(t)$) erhaltenen Vektorpaares $R_N(k - 1)$, $V_N(t)$), eines zweiten Vektors $\Delta V_N(t)=(\Delta v_0(t),...,\Delta v_N(t))$, so dass $\Delta v_n(t) = |v_n(t) - r_n(k - 1)|^{\beta}$, wobei $\beta$ eine gegebene positive ganze Zahl ist,
> ➢ Berechnen der Norm $\|\Delta V_N(t)\|$ des Vektors $\Delta V_N(t)$ und Dividieren des Vektors durch die Norm zum Erhalten eines dritten Vektors $\Delta V'_N(t) = \Delta V_N(t)/\|\Delta V_N(t)\| = (\Delta v'_0(t),...,\Delta v'_N(t))$,
> ➢ Berechnen des folgenden zusätzlichen Kriteriums, um festzustellen, ob es eine gleichmäßige oder lokalisierte Verteilung von Differenzen zwischen den beiden betrachteten Bildern gibt:

> ○

$$DC = (\Delta V_N^{MAX} - \frac{1}{N})/(1 - \frac{1}{N}) \, ,$$

> wobei

$$\Delta V_N^{MAX} = MAX(\Delta v'_n(t)), 0 \le n < N \, ,$$

> ○ Anwenden des folgenden Tests, wenn DC < $S_{DC}$ ist, wobei die Differenzen zwischen den zwei betrachteten Bildern gleichmäßig verteilt sind, andernfalls sind sie auf einer gegebenen Zone der Bilder lokalisiert.

**4.** Verfahren nach einem der Ansprüche 1 bis 3, **dadurch gekennzeichnet, dass** Schritt 5 durch Durchführen eines Vergleichstests zwischen dem Korrelationskoeffizienten $\alpha$ und einer vordefinierten Schwelle S, eine positive ganze Zahl, auf die folgende Weise erfolgt:

> ➢ wenn $\alpha$ < S ist, dann wird das aktuelle Bild $I(t)$ ausgewählt, der Referenzvektor wird aktualisiert $R_N(k) = V_N(t)$ und der ausgewählte Bildindex wird $k = k + 1$ inkrementiert
> ➢ im gegenteiligen Fall wird das Bild nicht als relevantes Bild behalten.

**5.** Verfahren nach einem der Ansprüche 1 bis 4, **dadurch gekennzeichnet, dass** der Schritt des Auswählens von relevanten Bildern (13) die folgenden zusätzlichen Schritte beinhaltet:

> ➢ Definieren eines Bildzählers $cpt\_I$, der auf 1 initialisiert wird, wenn ein relevantes Bild in Schritt 5 ausgewählt wird, und der um 1 bei jedem empfangenen neuen aktuellen Bild I(t) inkrementiert wird, sowie eines Maximalwerts des Zählers $cpt\_I\_max,$
> ➢ Durchführen des folgenden Vergleichstests für jedes Bild: wenn $\alpha \ge$ S und $cpt\_I \ge cpt\_I\_max$ ist, Auswählen des Bildes als relevant.

**6.** Verfahren nach den Ansprüchen 1 bis 4, **dadurch gekennzeichnet, dass** der Schritt des Auswählens von relevanten Bildern (13) die folgenden zusätzlichen Schritte beinhaltet:

> ➢ Definieren eines Bildzählers $cpt\_I$, der auf 1 initialisiert wird, wenn ein relevantes Bild in Schritt 5 gewählt wird, und der um 1 bei jedem empfangenen neuen aktuellen Bild I(t) inkrementiert wird, und eines Mindestwertes des Zählers $cpt\_I\_min,$
> ➢ Durchführen des folgenden Vergleichstests für jedes Bild: wenn $\alpha$ < S und $cpt\_I < cpt\_I\_min$ ist, Nichtbehalten des Bildes als relevant.

**7.** Verfahren nach einem der Ansprüche 1 bis 6, **dadurch gekennzeichnet, dass** der Schritt des Auswählens von relevanten Bildern (13) die folgenden zusätzlichen Schritte beinhaltet:

➢ Definieren einer gewünschten Anzahl $N_s$ von ausgewählten Bildern pro Sekunde,

➢ Definieren eines Zeitintervalls mit einer Dauer von gleich $T_h$ zum Aktualisieren der Schwelle S,

➢ Berechnen, in jedem Zeitintervall mit einer Dauer von gleich $T_h$, der Anzahl von ausgewählten Bildern N mit dem Verfahren während des vorherigen Zeitintervalls mit der Dauer von gleich $T_h$,

➢ Modifizieren, in jedem Zeitintervall mit einer Dauer von gleich $T_h$, des Wertes der Schwelle S auf die folgende Weise:

wenn $N < N_s$ ist, S = S - $\delta$S
wenn $N > N_s$ ist, S = S + $\delta$S, wobei $\delta$S ein ganzzahliger positiver inkrementaler Wert ist, der anfangs festgelegt und/oder dynamisch justiert wird.

**8.** Verfahren nach einem der Ansprüche 1 bis 3, **dadurch gekennzeichnet, dass** Schritt 5 im Durchführen eines Vergleichstests zwischen dem Korrelationskoeffizienten $\alpha$ und einer positiven Anzahl J von vordefinierten Schwellen $S_j$ besteht, $1 \leq j < J$, auf die folgende Weise:

➢ wenn $0 \leq \alpha < S_1$ ist, dann wird das aktuelle Bild mit einer maximalen Prioritätsstufe ausgewählt,

➢ wenn $S_j \leq \alpha < S_{j+1}$ ist, für $1 \leq j < J-1$, dann wird das aktuelle Bild mit einer mittleren Prioritätsstufe j ausgewählt,

➢ wenn $\alpha \geq S_J$ ist, dann wird das Bild nicht als relevant behalten, $S_j$ ist eine positive ganze Zahl.

**9.** Verfahren nach einem der Ansprüche 1 bis 3, **dadurch gekennzeichnet, dass** Schritt 5 auf die folgende Weise durchgeführt wird:

➢ Sortieren der T Bilder der Videosequenz in aufsteigender Reihenfolge des Wertes ihres Korrelationskoeffizienten $\alpha$,

➢ Gruppieren der sortierten T Bilder in J+1 hierarchisierte Gruppen in Abhängigkeit vom Wert von $\alpha$, wobei jede der Bildergruppen dieselbe Anzahl von Bildern umfasst und einer mittleren Prioritätsstufe j' entspricht.

**10.** Verfahren nach Anspruch 8 oder 9, **dadurch gekennzeichnet, dass** die Videosequenz mit hoher Auflösung vor der Übertragung mit den folgenden Schritten komprimiert wird:

➢ Bewirken einer räumlichen Unterabtastung (11) des Videoflusses mit hoher Auflösung, um eine Videosequenz mit niedriger Auflösung (2) zu erhalten,

➢ Anwenden des Schrittes des Auswählens von relevanten Bildern (13) auf die erhaltene Videosequenz mit niedriger Auflösung,

➢ Bewirken einer Kompression der Sequenz (2) durch einen Videocoder (14), ausgelegt zum Erzeugen einer bestimmten Struktur von Bildergruppen, in denen die ausgewählten relevanten Bilder Folgendes definieren:

◦ eine zeitliche Auflösung, die alle der ausgewählten relevanten Bilder enthält, falls der Schritt des Auswählens von relevanten Bildern (13) nur eine Gruppe von relevanten Bildern alle mit derselben Prioritätsstufe liefert,

◦ mehrere zeitliche Auflösungen, die jeweils die ausgewählten relevanten Bilder mit einer anderen Prioritätsstufe enthalten, falls der Schritt des Auswählens von relevanten Bildern (13) mehrere Gruppen von relevanten Bildern mit unterschiedlichen Prioritätsstufen liefern.

**11.** Verfahren nach Anspruch 10, **dadurch gekennzeichnet, dass** der Videocoder (14) dem Standard H.264 entspricht.

**12.** Verfahren nach Anspruch 10 oder 11, **dadurch gekennzeichnet, dass** die zu übertragende Videosequenz mit hoher Auflösung in einer Speichereinheit (12) gesichert wird und ein Bild oder eine Bildzone der Videosequenz zum Übertragen oder Neuübertragen mit den folgenden Schritten ausgewählt wird:

➢ Bewirken einer räumlichen Überabtastung (16) des Bildes, um ein Bild mit hoher Auflösung (6) zu erhalten,

➢ Berechnen der Differenz zwischen dem überabgetasteten Bild (6) und dem entsprechenden zuvor gespeicherten Bild (12), um einen Rest (9) zu erhalten,

➢ Komprimieren des Rests (9) über einen Bildcoder (21), um einen komprimierten Fluss zu produzieren, der wenigstens die Pakete enthält, die eine Information über die hohen Frequenzen des Bildes (12) enthalten, und andere Pakete, die eine Information über die tiefen Frequenzen des Bildes enthalten,

➢ Übertragen des komprimierten Flusses zu einem fernen Operator (19).

13. Verfahren nach Anspruch 12, **dadurch gekennzeichnet, dass** das neu zu übertragende Bild oder das mit der neu zu übertragenden Bildzone assoziierte Bild mit seinen zeitlich benachbarten Bildern im Innern der Videosequenz mit hoher Auflösung verglichen wird, um festzustellen, welches das am wenigsten unscharf ist, mit den folgenden Schritten:

➢ Berechnen, an dem gewählten Bild oder der ausgewählten Bildzone, eines Kriteriums, das die Schärfe des Bildes oder der Bildzone repräsentiert, wobei das Schärfekriterium ein erstes Extrem aufweist, wenn das Bild oder die Bildzone perfekt scharf ist, und ein zweites Extrem entgegengesetzt zu dem ersten, wenn das Bild oder die Bildzone völlig unscharf ist,

➢ Bewirken derselben Berechnung an den M zeitlich benachbarten Bildern, wobei M ein vordefinierter Wert ist,

➢ Auswählen des schärfsten Bildes gemäß dem vorherigen Kriterium und Neuübertragen dieses Bildes oder der assoziierten Bildzone anstelle des anfangs ausgewählten.

14. Verfahren nach Anspruch 12 oder 13, **dadurch gekennzeichnet, dass** der Bildcoder (21) so ausgelegt ist, dass er die Reihenfolge des Sendens der den komprimierten Fluss bildenden Pakete wenigstens in Abhängigkeit von einer für die Übertragung verfügbaren und zuvor festgelegten Durchsatzinformation (14) definiert.

15. Verfahren nach einem der Ansprüche 12 bis 14, **dadurch gekennzeichnet, dass** der Bildcoder (21) dem Standard JPEG2000 entspricht.

16. Verfahren nach einem der Ansprüche 12 bis 15, **dadurch gekennzeichnet, dass** die Neuübertragung eines Bildes oder einer Bildzone über eine Anforderung (8) des fernen Operators erfolgt.

17. Verfahren nach Anspruch 16, **dadurch gekennzeichnet, dass** die Anforderungen (8) und die Antworten auf die Anforderungen über den JPIP-Standard erfolgen.

18. Interaktives System zum Übertragen von Videosequenzen mit hoher Auflösung, **dadurch gekennzeichnet, dass** es einen Sender und einen Empfänger umfasst, umfassend Mittel zum Durchführen der Schritte des Verfahrens nach einem der Ansprüche 1 bis 17.

**Claims**

1. A method of on-line transmission of a high-resolution video sequence composed of a succession of T images, **characterized in that** it comprises at least one step of selecting relevant images (13) comprising at least the following steps:

➢ Step 1: Split each image to be transmitted at the instant t into a number N of zones,

➢ Step 2: For each zone n determined in step 1, calculate a value $v_n(t)$ representative of the content of said zone,

➢ Step 3: For each image $I(t)$ to be transmitted, generate a vector $\mathbf{V}_N(t)$ of size N representative of the content of said image and containing the values obtained in step 2 for each of the zones determined in step 1, $\mathbf{V}_N(t) = [v_0(t),...,v_{N-1}(t)]^T$, $[.]^T$ being the transposition operator for a vector,

➢ Step 4: Calculate a normalized coefficient of correlation $\alpha$ between the reference vector $\mathbf{R}_N(k) = V_N(t_1) = [r_0(k),\cdots,r_{N-1}(k)]^T$ determined for an image previously selected at the instant $t_1$ $I^{sel}(k-1) = I(t_1)$ and the vector $\mathbf{V}_N(t)$ calculated for the current image $I(t)$ via the following calculation:

$$\alpha = \frac{\mathbf{R}_N^T(k-1).\mathbf{V}_N(t)}{\sqrt{\mathbf{R}_N^T(k-1).\mathbf{R}_N(k-1)}.\sqrt{\mathbf{V}_N^T(t).\mathbf{V}_N(t)}},$$

where k is the temporal index of a selected image,

➤ Step 5: Make a decision on the selection (or not) for transmission of the current image $I(t)$ by comparing the value of the normalized correlation coefficient $\alpha$ with one or more thresholds having values fixed a priori,

➤ Step 6: Transmit an under-sampled sequence comprising only the selected images,

➤ for at least one selected image,

   ○ search in a temporal neighborhood of the selected image for an image that is sharper than the selected image,
   ○ retransmit the sharper image.

2. The method as claimed in claim 1, **characterized in that** the value $v_n(t)$ calculated in step 2 is obtained by calculating one of the criteria derived from a histogram containing the luminance or chrominance values of the pixels of the zone n of the image $I(t)$ - said criteria including: the energy, the variance, the damping coefficient (or Kurtosis), the asymmetry coefficient (or Skewness) or the center of gravity of said histogram - or by performing a linear combination of at least two of these criteria.

3. The method as claimed in one of claims 1 to 2, **characterized in that** the step of selecting relevant images (13) additionally comprises the following steps:

➤ On the basis of each pair of vectors $(R_N(k-1), V_N(t))$, obtained for the pair of images $(I^{sel}(k-1), I(t))$, calculate a second vector $\Delta V_N(t) = (\Delta v_0(t), \cdots, \Delta v_N(t))$ such that $\Delta v_n(t) = | v_n(t) - r_n(k-1) |^{\beta}$, $\beta$ being a given positive integer,

➤ Calculate the norm $\|\Delta V_N(t)\|$ of the vector $\Delta V_N(t)$ and divide said vector by said norm to obtain a third vector

$$\Delta V_N'(t) = \frac{\Delta V_N(t)}{\|\Delta V_N(t)\|} = (\Delta v_0'(t), \cdots, \Delta v_N'(t))$$

➤ Calculate the following extra criterion so as to determine whether there is uniform or localized distribution of the differences between the two images considered:

   ○

$$DC = (\Delta V_N^{MAX} - \frac{1}{N}) / (1 - \frac{1}{N}) ,$$

   with

$$\Delta V_N^{MAX} = MAX(\Delta v'_n(t)), 0 \le n < N ,$$

   ○ applying the following test, if DC < $S_{DC}$, the differences between the two images considered are uniformly distributed, otherwise they are localized in a given zone of said images.

4. The method as claimed in one of claims 1 to 3, **characterized in that** step 5 is implemented by performing a test of comparison between the correlation coefficient $\alpha$ and a predefined threshold S, a strictly positive integer, in the following manner:

➤ if $\alpha < S$, the current image $I(t)$ is selected, the reference vector is updated $\mathbf{R}_N(k) = \mathbf{V}_N(t)$ and the selected image index is incremented $k = k + 1$

➤ in the converse case, the image is not retained as relevant image.

5. The method as claimed in claims 1 to 4, **characterized in that** the step of selecting relevant images (13) comprises the following additional steps:

➤ Define an image counter $cpt\_I$, initialized to 1 when a relevant image is selected in step 5 and incremented by 1 with each new current image I(t) received as well as a maximum value of said counter $cpt\_I\_max,$

➤ For each image, perform the following comparison test: if $\alpha \ge S$ and $cpt\_I \ge cpt\_I\_max,$ select said image as relevant.

6. The method as claimed in claims 1 to 4, **characterized in that** the step of selecting relevant images (13) comprises the following additional steps:

> Define an image counter *cpt_I*, initialized to 1 when a relevant image is selected in step 5 and incremented by 1 with each new current image I(t) received and a minimum value of said counter *cpt_I_min,*
> For each image, perform the following comparison test: if $\alpha$ < S and *cpt_I < cpt_I_min,* do not retain said image as relevant.

7. The method as claimed in claims 1 to 6, **characterized in that** the step of selecting relevant images (13) comprises the following additional steps:

> Define a desired number $N_s$ of images selected per second,
> Define a time interval of duration equal to $T_h$ for the updating of said threshold S,
> At each time interval of duration equal to $T_h$, calculate the number of images N selected by the method during said previous time interval of duration equal to $T_h$,
> At each time interval of duration equal to $T_h$, modify the value of the threshold S in the following manner:

If

$$N < N_s, \text{S= S - } \delta S$$

If $N > N_s$, S= S + $\delta$S, where $\delta$S is an initially fixed and/or dynamically adjusted incremental positive integer value.

8. The method as claimed in claims 1 to 3, **characterized in that** step 5 consists in performing a test of comparison between the correlation coefficient $\alpha$ and a strictly positive number J of predefined thresholds $S_j$, $1 \leq j < J$, in the following manner:

> If $0 \leq \alpha < S_1$, the current image is selected with a maximum degree of priority,
> If $S_j \leq \alpha < S_{j+1}$, for $1 \leq j < J-1$ the current image is selected with a mean degree of priority j,
> If $\alpha \geq S_J$, the image is not retained as relevant, $S_j$ is a strictly positive integer.

9. The method as claimed in claims 1 to 3, **characterized in that** step 5 is performed in the following manner:

> Sort the T images of said video sequence in ascending order of the value of their correlation coefficient $\alpha$,
> Group the T sorted images into J+1 groups hierarchized as a function of the value of $\alpha$, each of said groups of images comprising the same number of images and corresponding to a mean degree of priority j'.

10. The method as claimed in one of claims 8 or 9, **characterized in that** the high-resolution video sequence is compressed before transmission via the following steps:

> Perform a spatial under-sampling (11) of said high-resolution video stream so as to obtain a video sequence of lower resolution (2),
> Apply the step of selecting relevant images (13) to the video sequence of lower resolution obtained,
> Perform a compression of said sequence (2) by a video coder (14) suitable for generating a particular structure of group of images, in which the relevant images selected define:

○ a temporal resolution, containing the set of relevant images selected in the case where the step of selecting relevant images (13) delivers only one group of relevant images all having the same degree of priority,
○ several temporal resolutions, each containing the relevant images selected with a different degree of priority, in the case where the step of selecting relevant images (13) delivers several groups of relevant images with different degrees of priority.

**11.** The method as claimed in claim 10, **characterized in that** the video coder (14) conforms to the H.264 standard.

**12.** The method as claimed in one of claims 10 or 11, **characterized in that** the high-resolution video sequence to be transmitted is saved in a storage unit (12) and that an image or image zone of said video sequence is selected so as to be transmitted or retransmitted according to the following steps:

  ➢ Perform a spatial over-sampling (16) of said image so as to obtain a high-resolution image (6),
  ➢ Calculate the difference between the over-sampled image (6) and the corresponding one previously stored (12) so as to obtain a residual (9),
  ➢ Compress said residual (9) via an image coder (21) so as to produce a compressed stream comprising at least packets which contain an information on the high frequencies of the image (12) and other packets which contain an information on the low frequencies of said image,
  ➢ Transmit said compressed stream to a remote operator (19).

**13.** The method as claimed in claim 12, **characterized in that** the image to be retransmitted or the image associated with said image zone to be retransmitted is compared with its temporally neighboring images within said high-resolution video sequence so as to determine which is the least blurred according to the following steps:

  ➢ Calculate on the image or the image zone selected a criterion representative of the sharpness of said image or image zone, said sharpness criterion exhibiting a first extremum when said image or image zone is perfectly sharp and a second extremum opposite to the first when said image or image zone is totally blurred,
  ➢ Perform the same calculation on the M temporally neighboring images, M being a predefined value,
  ➢ Select the sharpest image according to the previous criterion and retransmit this image or the associated image zone, in place of the one initially selected.

**14.** The method as claimed in one of claims 12 to 13, **characterized in that** the image coder (21) is suitable for defining the order of dispatching of the packets making up the compressed stream as a function, at least, of an information regarding available bitrate for transmission and fixed a priori (14).

**15.** The method as claimed in one of claims 12 to 14, **characterized in that** the image coder (21) conforms to the JPEG2000 standard.

**16.** The method as claimed in one of claims 12 to 15, **characterized in that** the retransmission of an image or image zone is done via a request (8) from the remote operator.

**17.** The method as claimed in claim 16, **characterized in that** the requests (8) and the responses to said requests are implemented via the JPIP standard.

**18.** An interactive system for transmitting high-resolution video sequences, **characterized in that** it comprises a sender and a receiver comprising means for executing the steps of the method as claimed in one of claims 1 to 17.

FIG.1

Niveau de base (0)

Flux de code à faible débit

Niveau de raffinement 1

Flux de code débit moyen

Niveau de raffinement 2

Flux de code débit élevé

tempis

FIG.2

**FIG.3**

**FIG.4**

Séquence
d'images

Sélection d'images pertinentes

Séquence
d'images avec
information
de priorité

Réalisation du schéma de granularité temporelle pour le codeur vidéo

Structure
associée aux
informations
de priorité

Résolution Temporelle

Séquence d'images très prioritaires

Séquence d'images moyennement prioritaires

Séquence d'images faiblement prioritaires

**FIG.5**

```
┌──────────────────────────┐                    ┌──────────┐
│ Allocation de débit/distorsion │  Paramètres   →  │          │
│        priorité n        │                    │          │
└──────────────────────────┘                    │          │
            ↓                                    │          │
┌──────────┐  ┌──────────────────────────┐      │          │
│          │  │ Allocation de débit/distorsion │  Paramètres  →│ Codage Vidéo │  Flux vidéo
│ Image de │→ │        priorité k        │      │          │  codé →
│ priorité │  └──────────────────────────┘      │          │
│    k     │            ↓                        │          │
└──────────┘  ┌──────────────────────────┐      │          │
              │ Allocation de débit/distorsion │  Paramètres  →│          │
              │        priorité 0        │      │          │
              └──────────────────────────┘      └──────────┘
```

# FIG.6

Y_offset

X_offset

Fy

Région d'intérêt

Ry

Rx

Fx

**FIG.7**

**EP 2 368 367 B1**

## RÉFÉRENCES CITÉES DANS LA DESCRIPTION

**Documents brevets cités dans la description**

- US 20080232687 A
- WO 2007078801 A

- WO 2004114672 A

**Littérature non-brevet citée dans la description**

- **YU SUN ; S. DUTHALER ; B. J. NELSON.** Autofocusing Algorithm Selection in Computer Microscopy. *In Proceedings of IEEE IROS (International Conference on Intelligent Robots and Systems),* 2005, 70-76